# EUROPÄISCHE PATENTSCHRIFT

(11) **EP 0 940 217 B1**
(45) Veröffentlichungstag und Bekanntmachung des Hinweises auf die Patenterteilung: **07.04.2004**
(21) Anmeldenummer: 99102264.1
(22) Anmeldetag: 05.02.1999
(51) Int. Cl.: B23Q 1/28, B23Q 1/01, B23Q 1/58

(54) **Basis-Profil für die Spanntechnik zu vermessender Werkstücke**
Base member used in the clamping of workpieces to be measured
Profilé de base pour le serrage d'une pièce à mesurer

(30) Priorität: 06.03.1998 DE 19810771
(43) Veröffentlichungstag der Anmeldung: 08.09.1999
(73) Patentinhaber: Komeg Industrielle Messtechnik GmbH, 66333 Völklingen (DE)
(72) Erfinder: Haag, Jürgen, 66346 Püttlingen (DE); Lauer, Josef, 66346 Püttlingen (DE); Haage, Klaus, 66333 Völklingen (DE)
(74) Vertreter: Wieske, Thilo

(56) Entgegenhaltungen:
- DE-A- 3 716 057
- DE-C- 4 339 271

## Beschreibung

Die Erfindung betrifft ein Basis-Profil für den horizontalen und vertikalen, stabartigen Grundaufbau in der Spanntechnik für zu vermessende Werkstücke, wobei mit hoher Präzision angebrachte Bohrungen vorgesehen sind.

Bei herkömmlichen Aufspannsystemen für Werkstücke in der Meßtechnik sind neben Grundplatten vor allem Rasterprofile vorgesehen. Diese für den vertikalen und horizontalen stabartigen Grundaufbau verwendeten Rasterprofile weisen - bei oft großer Länge - ein durchgehendes Bohrungsraster auf, wobei die Bohrungen selbst, aber auch die Abstände von Bohrung zu Bohrung mit großer Präzision hergestellt sind, was einem hohen Aufwand an Kosten gleichkommt.

Solche teueren, mit einer Vielzahl präzis angebrachter Bohrungen versehenen Rasterprofile sind oft nicht erforderlich, wenn nur - beispielsweise - an den Enden und in der Mitte der Rasterprofile derartige Präzisionsbohrungen benötigt werden; die anderen vorhandenen Präzisionsbohrungen wären in diesem Fall überflüssig.

Der Erfindung liegt die Aufgabe zugrunde, das bekannte System der Rasterprofile für den horizontalen und vertikalen Aufbau in der Spanntechnik für Meßaufgaben so zu gestalten, daß es ohne Preisgabe der geforderten Genauigkeit flexibler an die jeweile Spannaufgabe angepaßt werden kann und dabei kostengünstiger als bisher ist.

Diese Aufgabe wird erfindungsgemäß bei einem Basis-Profil der eingangs näher bezeichneten Art dadurch gelöst, daß das Basis-Profil selbst keine zum Spannen erforderlichen Präzisionsbohrungen aufweist und einen im wesentlichen quadratischen Querschnitt mit eingezogenen Flanken hat, die mittig eine Rippe aufweisen, und daß dem Basis-Profil ein in Längsrichtung des Basis-Profils verschiebbarer, abhebbarer Schlitten zugeordnet ist, der an einer oder mehreren Seiten eine oder mehrere Präzisionsbohrungen aufweist.

Eine weitere Ausbildung der Erfindung besteht darin, daß dem abhebbaren Schlitten ein weiterer abhebbarer, vertikal zu dem Basis-Profil verschiebbarer Schlitten zugeordnet ist, der an einer oder mehreren Seiten eine oder mehrere Präzisionsbohrungen aufweist.

Erfindungsgemäß ist auch vorgesehen, daß dieses an einer oder beiden Stirnseiten über ein Verbinder-Set mit an sich bekannten Rasterprofilen verbunden ist.

Im Rahmen der Erfindung liegt es auch, daß die abhebbaren Schlitten auf der Unterseite als Halb-Schwalbenschwanz ausgebildet sind, daß darin ein schwenkbares Klemmprofil angeordnet ist, daß diesem Klemmprofil eine oder mehrere Arretierschrauben zugeordnet sind und daß eine oder mehrere Seiten der abhebbaren Schlitten eine oder mehrere Präzisionsbohrungen aufweisen.

Die mit der Erfindung erzielten Vorteile bestehen insbesondere darin, daß ein System für die stabartigen Profile in der Spanntechnik für Meßzwecke geschaffen worden ist, das unterschiedlichsten Aufgaben gerecht wird, bei wesentlich geringeren Gestehungskosten als bei bekannten Systemen.

Die Erfindung wird anhand der Zeichnungen näher erläutert.

Es zeigen
Fig. 1 das neue Basis-Profil in zwei Ansichten,
Fig. 2 dieses Profil mit einem abhebbaren Schlitten in drei Ansichten,
Fig. 3 dieses Profil mit zwei abhebbaren Schlitten in drei Ansichten,
Fig. 4 einen abhebbaren Schlitten in drei Ansichten,
Fig. 5 das Klemmprofil zu dem abhebbaren Schlitten in zwei Ansichten und
Fig. 6 den Zusammenbau verschiedener stabartiger Profile.

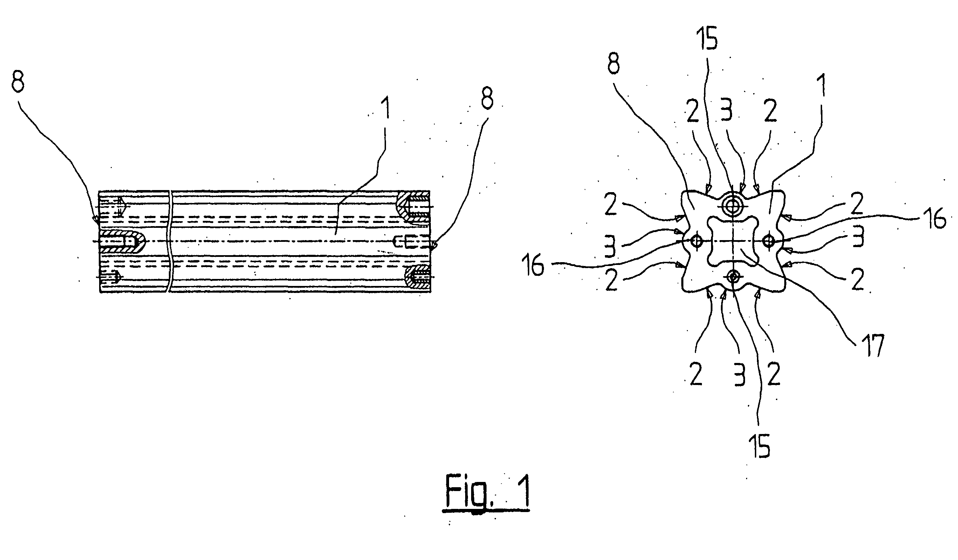

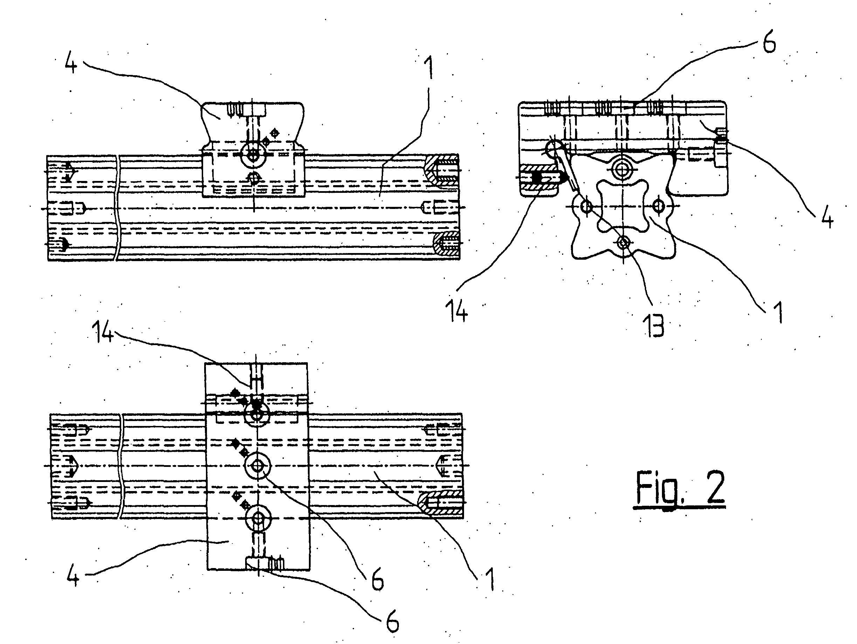

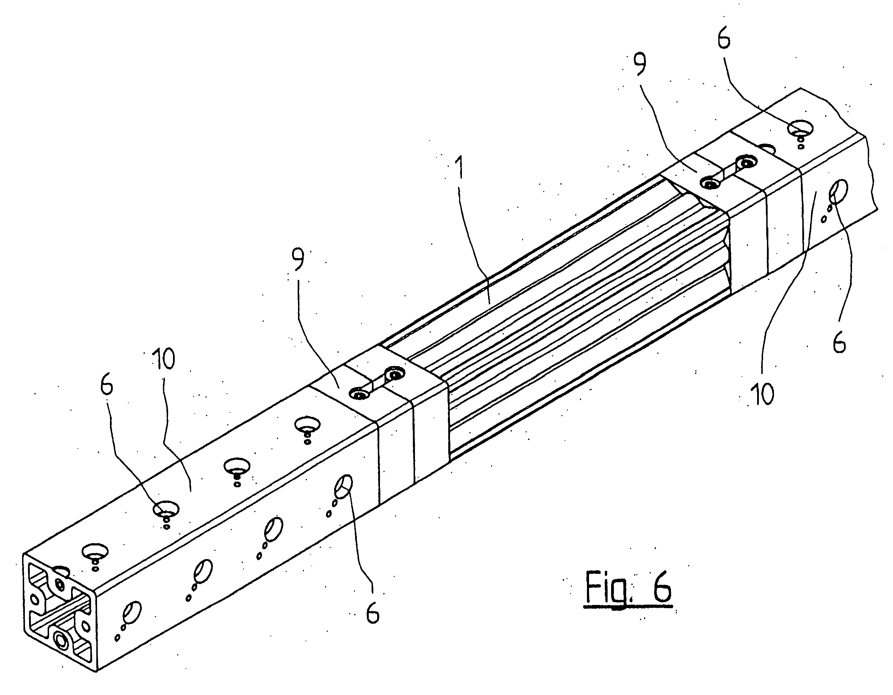

Fig. 1 zeigt das Basis-Profil 1 in zwei Ansichten. - Weitere Darstellungen dieses Basis-Profils 1 sind in den Fig. 2, 3 und 6 zu finden. Wie dargestellt, weist das Basis-Profil 1 im Gegensatz zu herkömmlichen Rasterprofilen 10 (Fig. 6) keine zum Spannen erforderlichen Präzisionsbohrungen 6 auf. Es hat einen im wesentlichen quadratischen Querschnitt, allerdings sind die Flanken 2 mittig in Längsrichtung mit Rippen 3 versehen. Wie die Ausnehmung 17 zeigt, ist das Basis-Profil 1 ein Hohlprofil, das beispielsweise durch Strangpressen hergestellt werden kann. Die Stirnseiten 8 des Basis-Profils 1 haben Bohrungen 15 und Gewindebohrungen 16 um beispielsweise über ein Verbinder-Set 9 (Fig. 6) andere Profile anschließen zu können.

Sollen im Bereich des Basis-Profils 1 Spannaufgaben gelöst werden, so kann diesem auf einer beliebigen Seite des Profils ein abhebbarer Schlitten 4 aufgesetzt werden, der seinerseits eine. oder mehrere Präzisionsbohrungen 6 aufweist. Die Befestigung des abhebbaren Schlittens 4 an dem Basis-Profil 1 geschieht derart, daß ein Klemmprofil 13 mit Hilfe einer oder mehrerer Arretierschrauben 14 gegen das Basis-Profil 1 gedrückt wird.

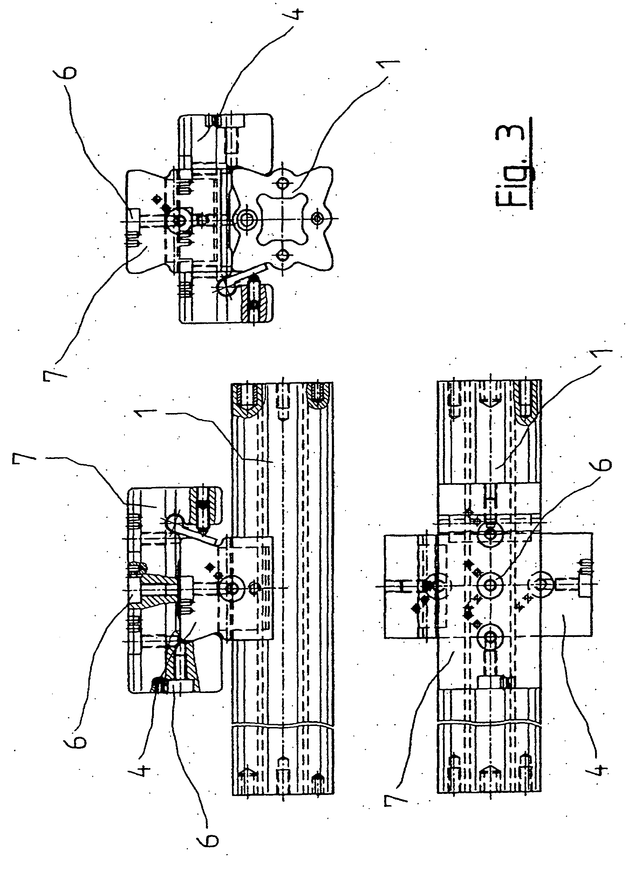

Der abhebbare Schlitten 4 in Fig. 2 ist in Längsrichtung des Basis-Profils 1 verschiebbar. Die Dimensionen des Schlittens erlauben es, auf der gegenüberliegenden Seite des Profils einen zweiten Schlitten aufzusetzen. Für weitergehende Spannaufgaben kann es erforderlich sein, auch in Querrichtung zu dem Basis-Profil 1 Präzisionsbohrungen 6 zur Verfügung zu haben. Diesem Zweck dient eine Anordnung, wie sie in Fig. 3 dargestellt ist: Der abhebbare Schlitten 4 trägt zu diesem Zweck einen weiteren abhebbaren, vertikal zu dem Basis-Profil 1 verschiebbaren Schlitten 7, der seinerseits eine oder mehrere Präzisionsbohrungen 6 aufweist. Die Befestigung des zweiten verschiebbaren Schlittens 7 auf dem ersten abhebbaren Schlitten 4 geschieht in der gleichen beschriebenen Weise.

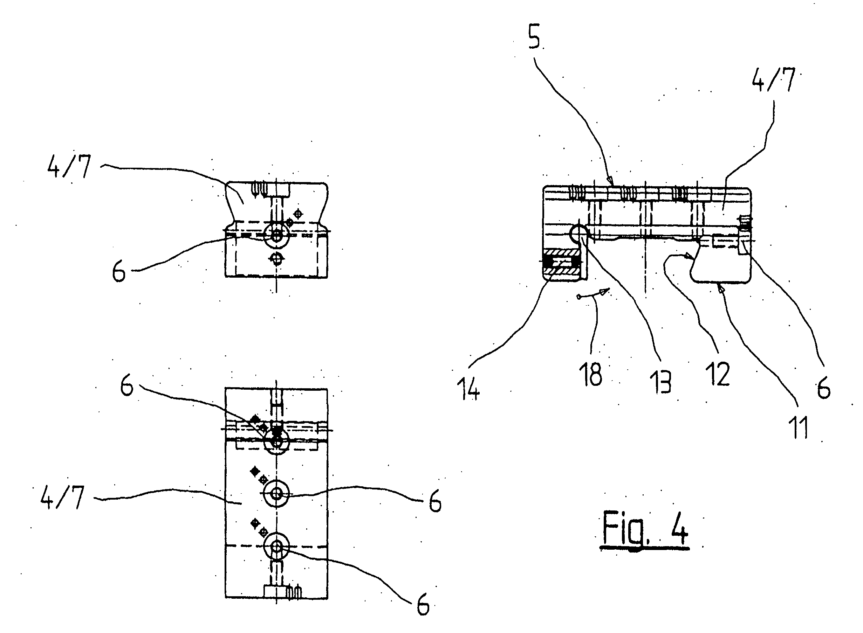

Zur Verdeutlichung der Wirkungsweise der abhebbaren Schlitten 4 und 7 zeigt Fig. 4 in drei Ansichten einen solchen Schlitten. Es ist ersichtlich, daß das Klemmprofil 13 mit Hilfe einer oder mehrerer Arretierschrauben 14 in Richtung des Pfeiles 18 gegen das Basis-Profil 1 geschwenkt werden kann, um den Schlitten 4 bzw. 7 zu arretieren. Das Klemmprofil 13 ist in der Aussparung an der Unterseite 11 angeordnet, die als Halb-Schwalberschwanz 12 ausgebildet ist. - Den zweiten Schenkel des Schwalbenschwanzes bildet - im arretierten Zustand - das durch die Arretierschraube 14 verschwenkte Klemmprofil 13.

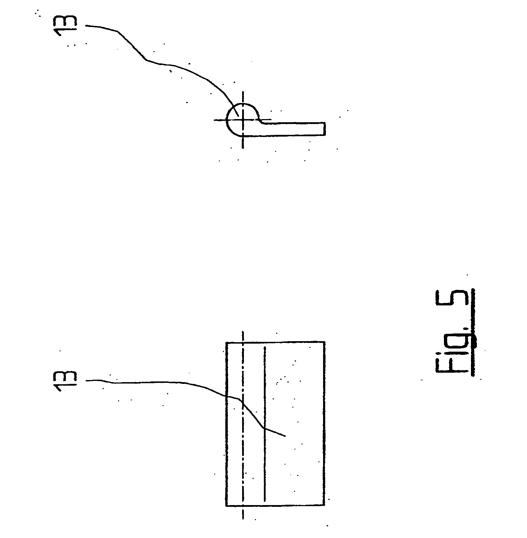

Fig. 5 zeigt das in den abhebbaren Schlitten 4 bzw. 7 verwendete Klemmprofil 13 in zwei Ansichten.

In Fig. 6 ist dargestellt, wie in der Praxis vorgegangen werden kann, wenn nur an bestimmten Stellen Präzisionsbohrungen 6 benötigt werden. Das selbst ohne Präzisionsbohrungen 6 versehene Basis-Profil 1 ist in dem gezeigten Beispiel an beiden Stirnseiten über je ein Verbinder-Set 9 mit an sich bekannten Rasterprofilen 10 verbunden, die ihrerseits Präzisionsbohrungen 6 haben. Je nach Spannaufgabe braucht das Basis-Profil 1 keinen abhebbaren Schlitten auf einer oder mehreren Seiten, es kann aber je nach Spannaufgabe beispielsweise mit einem oder mehreren abhebbaren Schlitten 4 bzw. 7 ausgerüstet sein.

## Patentansprüche

1. Basis-Profil für den horizontalen und vertikalen, stabartigen Grundaufbau in der Spanntechnik für zu vermessende Werkstücke, wobei mit hoher Präzision angebrachte Bohrungen vorgesehen sind, **dadurch gekennzeichnet, daß** das Basis-Profil (1) selbst keine zum Spannen erforderlichen Präzisionsbohrungen (6) aufweist und einen im wesentlichen quadratischen Querschnitt mit eingezogenen Flanken (2) hat, die mittig eine Rippe (3) aufweisen, und daß dem Basis-Profil (1) ein in Längsrichtung des Basis-Profils (1) verschiebbarer, abhebbarer Schlitten (4) zugeordnet ist, der an einer oder mehreren Seiten (5) eine oder mehrere Präzisionsbohrungen (6) aufweist.

2. Basis-Profil nach Anspruch 1, **dadurch gekennzeichnet, daß** dem abhebbaren Schlitten (4) ein weiterer abhebbarer, vertikal zu dem Basis-Profil (1) verschiebbarer Schlitten (7) zugeordnet ist, der an einer oder mehreren Seiten (5) eine oder mehrere Präzisionsbohrungen (6) aufweist.

3. Basis-Profil nach Anspruch 1 oder 2, **dadurch gekennzeichnet, daß** dieses an einer oder beiden Stirnseiten (8) über ein Verbinder-Set (9) mit an sich bekannten Rasterprofilen (10) verbunden ist.

4. Basis-Profil nach Anspruch 1 oder 2, **dadurch gekennzeichnet, daß** die abhebbaren Schlitten (4, 7) auf der Unterseite (11) als Halb-Schwalbenschwanz (12) ausgebildet sind, daß darin ein schwenkbares Klemmprofil (13) angeordnet ist, daß diesem Klemmprofil (13) eine oder mehrere Arretierschrauben (14) zugeordnet sind und daß eine oder mehrere Seiten (5) der abhebbaren Schlitten (4, 7) eine oder mehrere Präzisionsbohrungen (6) aufweisen.

## Claims

1. A base member for use in a horizontal and vertical, rod-like framework for clamping workpieces to be measured, with provision of high-precision bores, **characterised in that** the base member (1) itself has no precision bores (6) required for clamping, and has a substantially square cross section with drawn-in flanks (2) formed with a central rib (3), and that the base member (1) has a detachable carriage (4) which is displaceable in the longitudinal direction of the base member (1) and is provided with one or more precision bores (6) on one or more sides (6).

2. The base member of claim 1, **characterised in that** the detachable carriage (4) has another detachable carriage (7) which is displaceable transversely to the base member (1) and is provided with one or more precision bores (6) on one or more sides (5)

3. The base member of claim 1 or 2, **characterised in that** it is coupled at one or both end faces (8) via a connector kit (9) with conventional precision-bored members (10).

4. The base member of claim 1 or 2, **characterised in that** the detachable carriages (4,7) are configured on the bottom side (11) as a half-dovetail (12), that therein a swingable clamping member (13) is mounted, that one or more screw fasteners (14) are assigned to this clamping member (13) and that one or more sides (5) of the detachable carriages (4,7) are provided with one or more precision bores (6).

## Revendications

1. Profilé de base pour des structures de base horizontales et verticales à base de barres dans le domaine de la fixation de pièces à mesurer, dans lequel sont prévus des trous réalisés avec une grande précision, **caractérisé en ce que** le profilé de base (1) en lui-même n'a pas de trous de précision (6) nécessaire au serrage et présente une section essentiellement carrée avec des flancs (2) rentrés qui présentent en leur milieu une nervure (3), et **en ce que** le profilé de base (1) est doté d'un chariot (4) amovible pouvant coulisser dans la direction longitudinale du profilé de base (1), lequel chariot présente sur un ou plusieurs côtés (5) un ou plusieurs trous de précision (6).

2. Profilé de précision selon la revendication 1, **caractérisé en ce que** le chariot amovible (5) est doté d'un chariot (7) supplémentaire amovible pouvant coulisser verticalement par rapport au profilé de base (1 ), lequel chariot supplémentaire présentant sur un ou plusieurs côtés (5) un ou plusieurs trous de précision (6).

3. Profilé selon la revendication 1 ou 2, **caractérisé en ce que** celui-ci est relié par l'un ou les deux côtés frontaux (8) à des profilés présentant une trame (10) en soi connus à l'aide d'un jeu d'attache (9).

4. Profilé de base selon la revendication 1 ou 2, **caractérisé en ce que** les chariots amovibles (4, 7) ont dans leur partie inférieure la forme d'une demi-queue d'aronde, **en ce qu'**un profilé de serrage (13) est disposé dedans, **en ce que** ce profilé de serrage (13) est doté d'une ou plusieurs vis de blocage et **en ce qu'**un ou plusieurs côtés (5) des chariots (4, 7) sont munis d'un ou plusieurs trous de précision (6).
